# EUROPEAN PATENT APPLICATION

(11) **EP 0 884 278 A1**
(43) Date of publication of application: **16.12.1998**
(21) Application number: 97201763.6
(22) Date of filing: 11.06.1997
(51) Int. Cl.: C01F 7/56

(54) **A process for producing polyaluminium chloride**

(71) Applicant: AKZO NOBEL N.V., 6800 SB Arnhem (NL); Eka Chemicals AB, 445 80 Bohus (SE)
(72) Inventor: Pelin, Kalle, 431 49 Mölndal (SE); Hultén, Felix, 421 56 Västra Frölunda (SE); Westrin, Ulf, 574 34 Vetlanda (SE); Sörensen, Olle, 437 00 Lindome (SE)
(74) Representative: Jönsson, Christer

(57) **Abstract**

A process for production of polyaluminium chloride solution, which process comprises mixing hydrogen chloride with, and bringing it to react with, under heating, aluminium hydroxide and a sulphate-containing press cake, whereby at least part of said reaction is carried out at overpressure, and that said part is heated to a temperature above the upper limit of the boiling range or the boiling point a mixture of the same composition would have had at atmospheric pressure.

## Description

The present invention relates to a process for producing polyaluminium chloride in which hydrogen chloride is brought to react with aluminium hydroxide and a sulphate-containing cake.

In the present context "hydrogen chloride" is intended to comprise hydrochloric acid, i.e. aqueous solutions with various contents of dissolved and/or dissociated hydrogen chloride, including concentrated hydrochloric acid, as well as hydrochloric gas. The sulphate-containing press cake may be such as described in EP 181 847, i.e. dewatered sludge from aluminum pickling baths consisting essentially of a mixture of aluminium hydroxide and aluminium sulphate; any sulphate-containing, aluminum-containing substance having properties equivalent to those of a press cake according to EP 181 847 is, with regard to the present invention, comprised in the concept of a "press cake", such as for example sludge from any of the processes disclosed in EP 157 190 or in Modern Metals® (February 1992, pages 52-55). Below "polyaluminium chloride solution" is abbreviated "PAC".

EP 181 847 discloses a process of the same general kind as that of the present invention. According to EP 181 847, the finished product obtained is a saturated solution of polyaluminium chloride containing about 5.5-6 % by weight of aluminum at the most.; it is indicated in the patent specification that PAC containing more than about 6 % by weight of aluminum gives an unstable product that easily crystallises.

It would be desirable to be able to provide a method in which aluminum hydroxide, press cake and hydrogen chloride are brought to react to produce stable PAC containing higher weight percentages of aluminium, as a higher aluminum content gives better water purification properties; polyaluminium chlorides are, among other things, used as flocculating agents for the treatment of water. PAC:s are also used in the pulp and paper industry.

The problem to be solved by the present invention is thus to provide a process for production of a stable PAC from aluminum hydroxide, press cake and hydrogen chloride, which PAC contains more than about 6 % by weight of aluminum, and to provide such a stable PAC.

In this context "stable" means that the PAC remains substantially clear and free from precipitations for at least 9 weeks at 30°C.
This problem is solved by the present invention as defined by appended claim 1.

More specifically, the present invention relates to a process for production of polyaluminium chloride solution, which process comprises mixing hydrogen chloride with, and bringing it to react with, under heating, aluminium hydroxide and a sulphate-containing press cake, whereby at least part of said reaction is carried out at overpressure, and that said part is heated to a temperature above the upper limit of the boiling range or the boiling point a mixture of the same composition, i.e. a composition of hydrogen chloride, aluminium hydroxide, and a sulphate-containing press cake in the same amounts, concentrations and of the same qualities as used in the present process would have had at atmospheric pressure.

In the present context "overpressure" is intended to mean a pressure above that of the atmosphere.

The present invention provides for the use of higher portions of press cake, in relation to aluminum hydroxide, in the process while still obtaining stable PAC:s holding the same or higher Al-contents; this is of great economical as well as ecological importance, as press cake otherwise constitutes an ecologically harmful waste, being burdensome and expensive to dispose of, which however is available to a much lower cost than alternative Al-sources such as for instance Al(OH)₃ or metallic Al.

The present process may comprise one or more process steps. In one embodiment of the present process all of the press cake and the aluminium hydroxide is simultaneously reacted, at overpressure, with the hydrogen chloride. Optionally, all of the press cake, the aluminum hydroxide, and the hydrogen chloride is mixed in a first step, and then the mixture is brought to react under overpressure in a second step; the first and the second steps may be carried out in separate reactors, but may alternatively be carried out in one and the same reactor. In another embodiment the hydrogen chloride is brought to react, at overpressure, with the press cake into an intermediate product in a first step, and the intermediate product is then brought to react with the aluminium hydroxide in a second step, again at overpressure; the first and the second steps may be carried out in separate reactors, but may alternatively be carried out in one and the same reactor. In yet another embodiment the hydrogen chloride is brought to react with the press cake into an intermediate product in a first step, optionally at atmospheric pressure, which intermediate product then is reacted, at overpressure, with the aluminium hydroxide in a second step. The process may be continuous, semi-continuous, or batchwise.

The pressure in the pressurised part of the process is primarily a means to make it possible to carry out the process at higher temperatures. If not pressurised, the maximum temperature at which the reaction may be carried out at is determined by the boiling point, or the upper limit of the boiling range, of the reaction mixture at atmospheric pressure; this is also valid in case the reaction starts of from dry hydrogen chloride gas as well as completely dry press cake and aluminium hydroxide, i.e. with no water present initially, as water is actually produced during the reaction, due to neutralisation of the hydroxide by the acid.

The overpressure may be produced and/or controlled in a number of ways. It may, for instance, be produced by simply heating the reaction mixture of the hydrogen chloride, the press cake, and the aluminium hydroxide in a closed or essentially closed container. When a sufficient amount of heat has been conveyed to the mixture-container-system, overpressure will be established in the container; this situation is similar to that of cooking in an ordinary household pressure-cooker. The overpressure may then be controlled by regulation of the temperature. Another way to produce or control the over-pressure is provided when the reaction mixture is kept in a container pressurised by means of suitable pressurised gas, such as for instance compressed air, or some inert protective gas. Yet another way to produce or control the overpressure is by means of mechanically compressing, i.e. decreasing or increasing the volume of the gaseous phase in the closed or essentially closed container. These and other ways to produce or control overpressure, as well as combinations thereof, are all within the common general knowledge of persons skilled in the art.

The preferred way to produce overpressure in the present method is to heat the reaction mixture in a closed or essentially closed container, to a temperature above the corresponding boiling point or upper boiling range limit had the container been open or essentially open to the atmosphere. During the pressurised part of the present method the temperature suitably reaches above about 105°C, particularly above about 140°C, preferably above about 155°C, and most preferably above about 160°C.

Irrespective of how the overpressure is produced, the temperature during the pressurised part of the reaction does not have to be above the upper limit of the boiling range or the boiling point of the reaction mixture at atmospheric pressure for the whole of said pressurised part, although it might be so. In a preferred embodiment of the invention the temperature is kept, at overpressure, above the upper limit of the boiling range or the boiling point of the reaction mixture at atmospheric pressure, for at least about one and a half hour, preferably at least about 2 hours, and most preferably at least about 3 hours.

In a preferred embodiment of the present invention the reaction mixture is, at least during a part of the process, preferably during a part of the pressurised process step, an aqueous solution supersaturated with respect to one or more dissolved sulphates. Apart from the press cake the sulphates may originate from various sources, e.g. from impurities in the aluminium hydroxide and/or the hydrogen chloride. In some instances the sulphate may originate from aluminium sulphate used as a substitute for part of the aluminium hydroxide and/or the press cake, usually for economic reasons. It may also be that H₂SO₄ is substituted for part of the hydrogen chloride as a proton donor, in which case the sulphate content is of course also added to.

The sulphate content of the reaction mixture has shown to influence the stability of the obtained PAC:s. Thus, in one embodiment of the present process the reaction mixture is supersaturated into the metastable region with respect to sulphates. In this embodiment the amount of sulphate added to the reaction mixture is kept below about 1.0 weight percent, preferably below about 0.9 weight percent, calculated on the total weight of the produced PAC. As essentially all of the aluminum and sulphate end up in the produced PAC, when added in this relation and under said conditions, the sulphate to PAC ratio is reasonably easy to predict to a person skilled in the art.

It has, however, also been shown that it is possible to use a much higher ratio of press cake to aluminium hydroxide. In that instant sulphate-containing press cake is added to a solution, which is metastable with respect to sulphates, until sulphates start to precipitate. When this critical amount of press cake is reached and passed the sulphate concentration of the solution drops to that extent that the resulting concentration is below the original concentration, i.e. the paradoxical result is that the sulphate content of the PAC is lowered by adding sulphate. The precipitation provides for an enriching effect with respect to the aluminium of the press cake: an important portion of the sulphates originating from the press cake is isolated from the PAC, while the major part of aluminium originating from the press cake remains in the PAC. The size of said critical amount of press cake depends on various process parameters and must thus be determined on a case-to-case basis; this is within the ability of a person skilled in the art using common general knowledge. It has however been found that precipitation of sulphates is at least initiated when the process conditions are adjusted so that the amount of sulphate added to the reaction mixture is at least about 1.3 weight percent, preferably at least about 1.6 weight percent, and particularly at least about 1.7 weight percent, calculated on the total weight of the produced PAC. Furthermore, it has also been found that if the added amount of sulphate is too high the desired sulphate precipitation does not occur; this critical amount also depends on various process parameters and must thus also be determined on a case-to-case basis using the common general knowledge of the person skilled in the art. It has however been found that precipitation of sulphates at least occurs when the process conditions are adjusted so that the amount of sulphate added to the reaction mixture does not exceed about 2.7 weight percent, preferably about 2.6 weight percent, and particularly about 2.5 weight percent, calculated on the total weight of the produced PAC. It is believed that the auspicious precipitation of sulphates is initiated when the amount of added press cake is sufficient to provide enough sulphate for the concentration thereof to reach above the critical nucleation concentration or supersolubility boundary, i.e. to enter the unstable region from the metastable region. By continuously sampling the sulphate concentration in the reaction mixture during the process, a person skilled in the art may determine the presence of a metastable equilibrium; by following the increase of the sulphate concentration as more press cake is added to the reaction mixture, the person skilled in the art may then, by means of further sampling, establish when the supersolubility boundary is crossed, as well as see how the sulphate concentration plunges below the original concentration as various sulphates precipitate.

The presence of water during the process, especially the pressurised part, is preferably kept rather low, as this promotes higher Al-concentrations of the resulting PAC. There is a number of ways to limit the presence of water during the pressurised part of process, e.g. by using dried or otherwise dewatered press cake, by using highly concentrated hydrochloric acid, or by using hydrochloric gas. Another way to limit the presence of water is to mix all of the press cake, the aluminum hydroxide, and the hydrogen chloride in a first step, evaporate water from the mixture, and then to bring the mixture to react under a pressure in a second step; the first and the second steps may be carried out in separate reactors, but may preferably be carried out in one and the same reactor. As an alternative the press cake and the hydrogen chloride may be mixed in a first step, upon which water is evaporated from the mixture, and then the aluminum hydroxide is added, followed by the reaction under pressure in a second step; again, the first and the second steps may be carried out in separate reactors, but they are preferably carried out in the same reactor. Yet another way to limit the presence of water is to evaporate water from the produced stream of PAC by heating, or to evaporate water from the components of the reaction mixture, or from some of the components, prior to the reaction in the pressurised reactor. For instance, the components may first be mixed in one vessel, upon which water is evaporated, whereafter the reaction is carried out at overpressure, optionally in another vessel; alternatively, all components may be mixed in one vessel, whereupon the mixed components are transferred to another vessel, in which the evaporation and the reaction are carried out. It is also possible to perform so-called flashing, i.e. to subject the pressurised stream of PAC to a sudden drop of pressure, preferably down to atmospheric pressure. The said ways of limit the presence of water during the process may also be combined in various ways.

One way to limit the presence of water during the pressurised part of process is by using dried or otherwise dewatered press cake. Suitably, the press cake is dried, for instance in a tray or shelf dryer, tunnel dryer, rotary dryer, drum dryer, spray dryer, pneumatic convection dryer, fluidisized bed dryer, turbo-shelf dryer, or disc dryer. Among these dryers, rotary, pneumatic convection dryer, and spray dryers are preferred. The drying operation is preferably carried out at a temperature of at least about 100°C. The target dry content of the dried press cake is primarily determined by the amount of water carried into the instant process by the other reacting components, i.e. by the hydrogen chloride and the aluminum hydroxide, and the desired or accepted amount of water present during the pressurised part of the process. However, in a preferred embodiment the dry content, determined after drying at 105 °C, of the dried press cake is at least about 60%, preferably at least about 75% by weight.

In a preferred embodiment of the present invention the reaction mixture is evaporated, optionally while pressurised, prior to the actual reaction.

The present invention will be described in more detail below by means of non-limiting Examples.

Example 1: 30 kg of hydrochloric acid containing 31 weight-% HCl was introduced into a closed ceramic-lined reactor, the volume of which was 63 litres, equipped with an agitator rotating at a speed of 200 rpm. 9 kg of press cake having a dry content of 25%, an Al-content of 9 weight-%, and a sulphate-content of 12 weight-% was added to the hydrochloric acid. The press cake was dissolved in and formed an intermediate with the acid as the temperature in the reactor was raised until, after two hours, it reached about 150°C, whereby the overpressure reached about 390 kPa. The mixture was then cooled for the next half hour to about 75°C, whereby the pressure sunk to atmospheric level. Then 9 kg aluminum hydroxide having a dry content of 92%, an Al-content of 32 weight-%, and a sulphate-content of 2 weight-% was introduced into the reactor and allowed to react with intermediate. The temperature in the reactor was raised until, after three hours, it reached about 170°C, whereby the overpressure reached a corresponding level of about 500 kPa; these conditions were kept at the same level for two hours and 45 minutes, whereafter the mixture was cooled for three-quarters of an hour to about 40°C, whereby the pressure sunk to atmospheric level. The resulting PAC had an Al-content of 7.7 weight-%, an [OH]/[Al] ratio of 1.4, and a sulphate-content of 0.8 weight-%. The weight ratio between sulphate introduced, mainly with the press cake, and obtained PAC was 0.9%. Still after 9 weeks at 30°C there were no visible precipitations in the PAC.

Example 2: 24 kg of hydrochloric acid containing 37 weight-% HCl was introduced into a reactor of the kind described in Example 1. 20 kg of press cake of the same kind as in Example 1 but dried to a dry content of 31% measured at 105°C was added to the hydrochloric acid. The press cake was dissolved in and formed an intermediate with the acid as the temperature in the reactor was raised until, after about two hours, it reached 163°C, whereby the overpressure reached about 400 kPa. The mixture was then cooled for the next three-quarters of an hour to about 66°C, whereby the pressure sunk to atmospheric level. Then 5.5 kg aluminium hydroxide of the same kind as in Example 1 was introduced into the reactor and allowed to react with intermediate. During the reaction the solution assumed a milky appearance. The temperature in the reactor was raised until, after three hours, it reached about 170°C, whereby the overpressure reached about 500 kPa; the temperature and pressure were held at these levels for three hours, whereafter the mixture was cooled for three-quarters of an hour to about 40°C, whereby the pressure sunk to atmospheric level. The resulting PAC was filtered and showed to have an Al-content of 7.6 weight-%, an [OH]/[Al] ratio of 1.1, and a sulphate-content of < 0.5 weight-%. The precipitation on the filter was a mixture of (Na,Al)(SO₄,OH)AlCl₃·6H2O, and Al(OH)₃. The weight ratio between sulphate introduced, mainly with the press cake, and obtained PAC was 1.7%. Still after 9 weeks at 30°C there were no visible precipitations in the PAC.

Example 3:24 kg of hydrochloric acid containing 37 weight-% HCl and 0.2 kg of water was introduced into a reactor of the kind described in Example 1. Two portions of press cake, 2 kg and 10 kg, of the same kind as in Example 1 but dried to a dry content of 57% and 53%, respectively, both measured at 105°C, were added to the hydrochloric acid and water in the reactor. The press cake was dissolved in and formed an intermediate with the acid as the temperature in the reactor was raised until, after about two hours, it reached about 146°C, whereby the overpressure reached about 150 kPa. The mixture was then cooled for the next 30 minutes to about 78°C, whereby the pressure sunk to atmospheric level. Then 2 kg aluminum hydroxide of the same kind as in Example 1 was introduced into the reactor and allowed to react with intermediate. The temperature in the reactor was raised until, after three hours, it reached 166°C, whereby the overpressure reached a corresponding level of 390 kPa. These conditions were kept at the same level for three quarters of an hour, after which the mixture was cooled for an hour to 40°C, whereby the pressure sunk to atmospheric level. The resulting PAC had an Al-content of 9 weight-%, an [OH]/[Al] ratio of 1.1, and a sulphate-content of 0.6 weight-%. The weight ratio between sulphate introduced, mainly with the press cake, and obtained PAC was 2.5%. More than ten weeks later, there was no visible precipitation in the PAC. Still after 9 weeks at 30°C there were no visible precipitations in the PAC.

Example 4:17 kg of hydrochloric acid containing 37 weight-% HCl and 5 kg of water was introduced into a reactor of the kind described in Example 1.7 kg of press cake of the same kind as in Example 1 but dried to a dry content of 92 % measured at 105°C was added to the hydrochloric acid. The press cake was dissolved in and formed an intermediate with the acid as the temperature in the reactor was raised until, after two hours and 45 minutes, it reached about 161°C, whereby the overpressure reached 310 kPa. The mixture was then cooled for 35 minutes to about 75°C, whereby the pressure sunk to atmospheric level. Then 3.7 kg aluminium hydroxide of the same kind as in Example 1 was introduced into the reactor and allowed to react with intermediate. The temperature in the reactor was raised until, after almost three and a half hours, it reached 168°C, whereby the overpressure reached a corresponding level of 410 kPa; these conditions were held at the same level for a quarter of an hour, whereafter the mixture was cooled for half an hour to about 40°C, whereby the pressure sunk to atmospheric level. The resulting PAC had an Al-content of 7.7 weight-%, an [OH]/[Al] ratio of 0.9, and a sulphate-content of 0.9 weight-%. The weight ratio between sulphate introduced, mainly with the press cake, and obtained PAC was 2.6%. More than ten weeks later, there was no visible precipitation in the PAC. Still after 9 weeks at 30°C there were no visible precipitations in the PAC.

Example 5: The following components were introduced into a reactor of the kind described in Example 1:
- 24. kg of hydrochloric acid containing 37 weight-% HCl;
- 1.4 kg of water;
- press cake, 1.7 kg and 3.3 kg, of the same kind as in Example 1 but dried to a dry content of 53% and 92%, respectively, both measured at 105°C;
- 3.4 kg press cake having a dry content of 97%, measured at 105°C, and an Al-content of 32,39%; this press cake was prepared by drying a press cake having a dry content of 24%, measured at 105°C, an Al-content of 8.5 weight-%, and a sulphate-content of 6 weight-%; and
- 4.6 kg aluminium hydroxide of the same kind as in Example 1.

The components reacted exothermically. Due to the reaction heat, combined with external heating, the temperature in the reactor raised and reached, after about 5 and a half hours, about 169°C, whereby the overpressure reached 360 kPa. The mixture was then cooled for 45 minutes to about 40°C, whereby the pressure sunk to atmospheric level. The resulting PAC had an Al-content of 9.1 weight-%, an [OH]/[Al] ratio of 1.2, and a sulphate-content of 0.5 weight-%. The weight ratio between sulphate introduced, mainly with the press cake, and obtained PAC was 2%. Still after 9 weeks at 30°C there were no visible precipitations in the PAC.

Example 6: 20 kg of hydrochloric acid containing 31 weight-% HCl was introduced into a reactor of the kind described in Example 1. 16 kg of press cake having a dry content of 28% and an Al-content of 8.5 weight-% was added to the hydrochloric acid. The press cake had a sulphate-content of 15.4 weight-%, based on the dry substance of the press cake. Furthermore, 3 kg aluminium hydroxide having a dry content of 92% and an Al-content of 31 weight-% was also added to the hydrochloric acid. The aluminum hydroxide had a sulphate-content of less than 2 weight-%, based on the dry substance of the aluminum hydroxide. Water was evaporated from the mixture at atmospheric pressure and a temperature of 107-114°C, for a period of three hours and 20 minutes, through a destillation column to a condenser. 9 kg of condensate was obtained. The valves connecting the reactor space to the atmosphere were thereafter closed, and the temperature in the reactor raised, during about four hours, up to about 160°C, inducing a corresponding over-pressure of 340 kPa, and the system conditions were kept at this level for 25 minutes, after which the reactor was cooled to below 40°C. The obtained PAC was filtered twice and showed to have an Al-content of 7.3 weight-%, an [OH]/[Al] ratio of 0.9, and a sulphate-content of 0.8 weight-%. The precipitation on the filter was at least partly (K, Na, Al)(SO₄, OH). The weight ratio between sulphate introduced, mainly with the press cake, and the obtained PAC was 2.4%. More than 15 weeks later, there was no visible precipitation in the PAC. Still after 9 weeks at 30°C there were no visible precipitations in the PAC.

## Claims

1. A process for production of polyaluminium chloride solution, which process comprises mixing hydrogen chloride with, and bringing it to react with, under heating, aluminium hydroxide and a sulphate-containing press cake, **characterised** in that at least part of said reaction is carried out at overpressure, and that said part is heated to a temperature above the upper limit of the boiling range or the boiling point a mixture of the same composition would have had at atmospheric pressure.

2. A process according to claim 1, **characterised** in that said press cake and the aluminium hydroxide is simultaneously reacted, at overpressure, with the hydrogen chloride.

3. A process according to claim 2, **characterised** in that the press cake, the aluminium hydroxide, and the hydrogen chloride are mixed in a first step, and that the mixture is brought to react at overpressure in a second step.

4. A process according to claim 1, **characterised** in that the hydrogen chloride is brought to react, in a first step, at overpressure, with the press cake into an intermediate product, which intermediate product then is brought to react, at overpressure, with the aluminium hydroxide in a second step.

5. A process according to claim 1, **characterised** in that the hydrogen chloride is brought to react, in a first step, with the press cake into an intermediate product, which intermediate product then is reacted, in a second step, at overpressure, with the aluminium hydroxide.

6. A process according to claim 5, **characterised** in that the reaction in the first step is carried out at atmospheric pressure.

7. A process according to any preceding claim, **characterised** in that the temperature reaches above about 140°C during the pressurised part of said reaction.

8. A process according to any preceding claim, **characterised** in that the temperature is kept above the upper limit of said boiling range or said boiling point for at least about one and a half hour.

9. A process according to any preceding claim, **characterised** in that the overpressure is produced by heating the reaction mixture in an essentially closed space to a temperature above said boiling point or said upper boiling range.

10. A process according to any preceding claim, **characterised** in that the reaction mixture is, at least during a part of the process, an aqueous solution supersaturated with respect to at least one dissolved sulphate.

11. A process according to claim 10, **characterised** in that the reaction mixture is supersaturated into the metastable region, and the added amount of sulphate to the reaction mixture is kept below about 1.0 weight percent, calculated on the total weight of the produced polyaluminium chloride solution.

12. A process according to claim 10, **characterised** in that the solution is metastable, and that press cake is added to the solution until sulphates start to precipitate.
